Europäisches Patentamt

European Patent Office

Office européen des brevets

(19)

(11) Veröffentlichungsnummer : **0 071 264**
**B1**

(12) **EUROPÄISCHE PATENTSCHRIFT**

(45) Veröffentlichungstag der Patentschrift :
07.05.86

(21) Anmeldenummer : 82106841.8

(22) Anmeldetag : 28.07.82

(51) Int. Cl.⁴ : **H 04 Q   1/14**

(54) **Verteilerleiste für Fernsprechvermittlungsanlagen.**

(30) Priorität : **30.07.81 DE 3130133**

(43) Veröffentlichungstag der Anmeldung :
**09.02.83 Patentblatt 83/06**

(45) Bekanntmachung des Hinweises auf die Patenterteilung : **07.05.86 Patentblatt 86/19**

(84) Benannte Vertragsstaaten :
**AT BE CH FR GB IT LI SE**

(56) Entgegenhaltungen :
**DE-A- 2 048 104**
**DE-A- 2 048 144**
**DE-A- 2 848 481**

(73) Patentinhaber : **Siemens Aktiengesellschaft**
**Berlin und München Wittelsbacherplatz 2**
**D-8000 München 2 (DE)**

(72) Erfinder : **Scholtholt, Hans**
**Tannenstrasse 4**
**D-8044 Lohhof (DE)**
Erfinder : **Steiner, Ewald**
**Fichtenweg 11**
**D-8137 Berg 3 (DE)**

Jouve, 18, rue St-Denis, 75001 Paris, France

## Beschreibung

Die vorliegende Erfindung betrifft eine Verteilerleiste mit in einer wannenartigen metallischen, geerdeten Aufnahme gehaltenen Drahtführungs- und Funktionselementen, die wechselweise schichtartig angeordnet sind, wobei die Funktionselemente mit Klemmelemente und Kontaktelemente besitzenden Bauelementen bestückt sind, die einander benachbart angeordnet jeweils einen Trenn- oder Schaltkontakt für an die außenliegenden Klemmelemente anzuschließende ankommende und abgehende a- und b-Adern bilden und wobei zwischen zwei Ebenen von einander sich kreuzenden Drahtführungskanälen eines Drahtführungselementes ein metallische, geerdetes Schirmblech eingebracht ist. Um derartige bekannte Verteilerleisten auch für die Übertragung von höheren Frequenzen, z. B. für die Übermittlung von PCM-Signalen oder einem schnellen Datenfluß zwischen Rechensystemen geeignet zu machen, müssen Maßnahmen getroffen werden, die eine möglichst kleine Dämpfung und Beeinflussung zwischen ankommenden und abgehenden Leitungen bewirken. Es ist bereits z. B. durch die DE-A 2 048 144, die den Oberbegriff von Anspruch 1 belegt, bei derartig aufgebauten Verteilerleisten bekannt, zwischen den schichtartig angeordneten Drahtführungs- und Funktionselementen geerdete Schirmbleche anzuordnen, um eine statische Beeinflussung zwischen den einzelnen Elementen herabzusetzen.

Die Aufgabe der vorliegenden Erfindung ist es daher, durch weitere Maßnahmen eine gegenseitige Beeinflussung der stromführenden Teile derartiger Verteilerleisten zu verhindern.

Diese Aufgabe wird dadurch gelöst, daß an die Klemmelemente ein die a- und b-Adern mit einem metallischen Schirm umhüllendes Kabel angeschlossen ist, dessen Schirm mit einem den den a- und b-Adern zugeordneten Klemmelementen benachbarten weiteren Klemmelement kontaktiert ist, das wiederum mit einer am Funktionselement angeordneten Erdschiene verbunden ist und daß ferner das genannte Schirmblech zueinander versetzte Lappen aufweist, die an der metallischen Aufnahme zur Anlage gelangen.

Durch Verwendung eines geschirmten Kabels werden zunächst die ankommenden und abgehenden Leiter mit einem metallischen Schirm umschlossen, so daß sich bei der Übertragung höherer Frequenzen die in den Drahtführungselementen gehaltenen Leiter nicht gegenseitig beeinflussen können. Der an das genannte, weitere Klemmelement angeschlossene Schirm des Kabels wird über das freie Ende des Kontaktelementes an eine im Funktionselement angeordnete Erdschiene angeschlossen, die z. B. über ein federndes Erdblech mit an der metallischen Aufnahme verbundenen Gestellerde zur Anlage gelangt.

Sind die einzelnen in einer Drahtführungsebene angeordneten Leiter bereits durch den Schirm des Kabels statisch abgeschirmt, so besteht bei einander benachbarten Drahtführungsebenen eines Drahtführungselementes die Möglichkeit, durch Einfügen eines metallischen, geerdeten Schirmbleches zwischen diesen Drahtführungsebenen eine weitere Abschirmung zu bewirken. Dabei sind diese Schirmbleche mit zueinander versetzten Lappen versehen, die jeweils an der metallischen Aufnahme zur Anlage gelangen.

Ein gegebenenfalls erforderlicher magnetischer Erdschirm zwischen den einzelnen Ebenen kann durch Verwendung von magnetischem Material erzielt werden.

Die vorliegende Erfindung soll im folgenden anhand eines Ausführungsbeispiels erläutert werden.

Es zeigt :

Figur 1 eine Frontansicht auf mehrere innerhalb einer wannenartigen Aufnahme angeordnete Verteilerbauteile,

Figur 2 eine Aufsicht auf die Anordnung nach Fig. 1,

Figur 3 eine schematische Frontansicht von in einer Aufnahme angeordneten Schalt- oder Trennelementen,

Figur 4 eine um 90° gedrehte Ansicht der Anordnung nach Fig. 3,

Figur 5 ein zwischen einem Drahtführungselement einzubringendes Schirmblech,

Figur 6 und Figur 7 Einzelmerkmale dieses Schirmbleches.

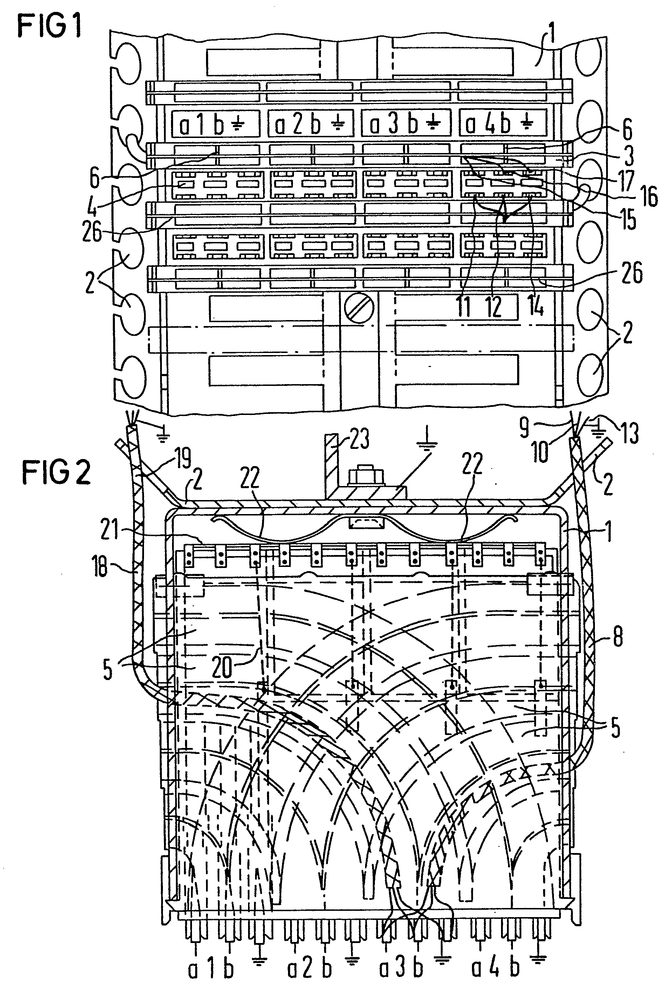

Die in den Figuren 1 und 2 dargestellte Verteilerleiste besitzt eine wannenartige metallische Aufnahme 1 mit an ihrem Fußteil winklig angeordneten Drahthalterungen 2. In Führungseinschnitten werden in diese wannenartige Aufnahme 1 Drahtführungselemente 3 eingeschoben, die mittels Rasten in der Aufnahme 1 befestigt sind. Zwischen diese Drahtführungselemente 3 sind die Funktionselemente 4 eingeschoben, die wiederum mittels in Ausnehmungen der Drahtführungselemente einrastender Nasen gehalten sind. Die Funktionselemente 4 können als Trenn- oder Schaltelemente mit speziellen Ausstattungsvarianten ausgebildet sein.

Die Funktionselemente 4 besitzen jeweils in Reihen paarweise zueinander angeordnete Bauelemente, deren jeweiliges an der Frontseite herausragendes Ende als Klemmelement zum abisolierfreien Anschluß von an die einzelnen Anschlußpunkte herangeführten und z. B. als Sprechadern dienenden Leitern gestaltet ist, während der im Inneren des jeweiligen Funktionselementes befindliche Kontaktteil so ausgebildet ist, daß er als Trenn- oder Schaltkontakt zur Anwendung gelangen kann.

Die Drahtführungselemente 3 besitzen Scharen von der die Klemmelemente aufweisenden Vorderseite ausgehenden und zur jeweiligen Seitenfläche verlaufenden Drahtführungskanälen 5, die sich kreuzen und bogenförmig gestaltet sind. Die von der Vorderseite zu jeweils einer Seitenfläche verlaufenden Kanäle einer Ebene sind durch Wände 6 und die sich kreuzenden Kanäle zweier Ebenen eines Drahtführungselementes durch eine Zwischenlage aus Isoliermaterial voneinander getrennt.

Um derartige Änlagen auch für höhere Frequenzen, z. B. für die Übertragung von PCM-Signalen oder einem schnellen Datenfluß zwischen Rechensystemen geeignet zu machen, muß dafür Sorge getragen werden, daß eine möglichst kleine Dämpfung und Beeinflussung zwischen benachbarten Leitungen auftritt.

Bei der hier dargestellten Ausführungsform werden von einem ankommenden geschirmten Kabel 8 zunächst die a- und b-Adern 9 und 10 an einander benachbarten Klemmelementen 11 und 12 angeschlossen, während der Schirm 13 des Kabels 8 mit dem diesen Klemmelementen 11 und 12 benachbarten weiteren Klemmelement 14 verbunden ist. Das Kabel 8 kann in bekannter Weise durch einen der Drahtführungskanäle von der Vorderseite zur Seitenfläche des Drahtführungselementes 3 geführt und anschließend durch eine der Drahthalterungen der metallischen Aufnahme gefädelt werden.

An den den Klemmelementen 11, 12 und 14 benachbarten Klemmelementen 15, 16 und 17 ist das abgehende Kabel 18 angeschlossen und in gleicher Weise wie das Kabel 8 durch einen der Drahtführungskanäle 5 zu der Drahthalterung 2 geführt.

Der an die weiteren Klemmelemente 14 bzw. 17 angeschlossene Schirm 13 bzw. 19 des Kabels 8 bzw. 18 ist jeweils über einen Erdungsdraht 20 mit einer am Funktionselement 4 angeordneten Erdschiene 21 elektrisch verbunden. Diese Erdschiene 21 ist wiederum über ein federndes Erdblech 22 mit der Gestellerde 23 kontaktiert.

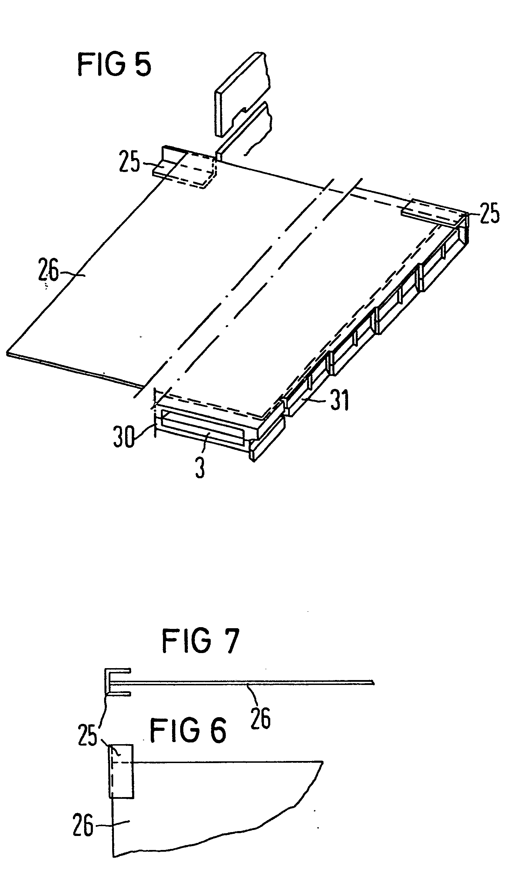

Eine weitere Abschirmung erfolgt durch zwischen den einzelnen Ebenen der Drahtführungskanäle eines Drahtführungselementes angeordnete Schirmbleche. Diese Schirmbleche 26 besitzen federnde und zueinander versetzte Lappen 25 (Fig. 5 bis 7), die mit den Führungseinschnitten der metallischen wannenförmigen Aufnahme einen Kontakt eingehen.

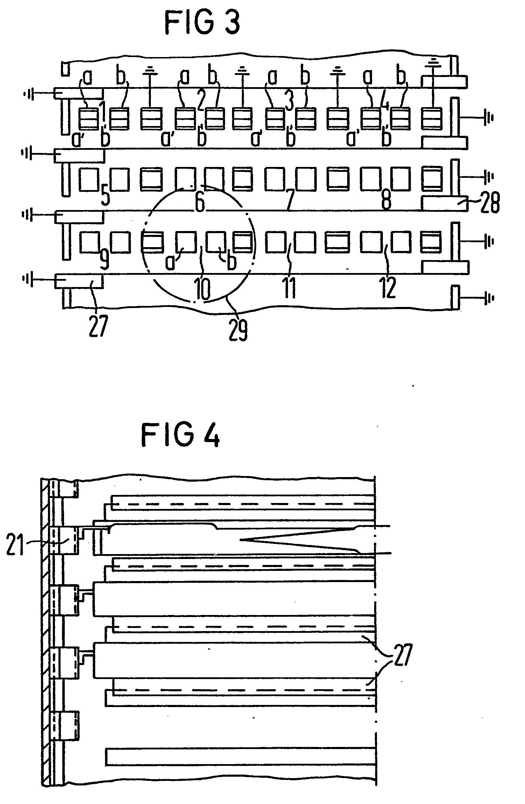

Wie aus der Figur 3 und Figur 4 ersichtlich ist, liegen die Erdungspunkte der Schirmbleche 26 im Bereich der Außenwände 27 und 28 der wannenförmigen Aufnahme 1, wobei, wie durch den Kreis 29 angedeutet, die a- und b-Adern jeweils von dem Schirm 13 des jeweiligen Kabels umschlossen werden.

In Figur 5 ist mit 3 ein Teil eines Drahtführungselementes gezeigt, wobei mit 30 die in einer Ebene mit den genannten Klemmelementen der Bauelemente liegende vordere Fläche und mit 31 eine der beiden seitlichen Austrittsflächen bezeichnet ist. Wie in den Figuren 6 und 7 gezeigt ist, sind im in Einschubrichtung der Drahtführungselemente zunächstliegenden Endbereich der Schirmbleche U-förmige Lappen 25 vorgesehen, die mit der metallischen wannenförmigen Aufnahme 1 einen Kontakt eingehen.

## Patentansprüche

1. Verteilerleiste mit in einer wannenartigen metallischen, geerdeten Aufnahme (1) gehaltenen Drahtführungs- (3) und Funktionselementen (4), die wechselweise schichtartig angeordnet sind, wobei die Funktionselemente (4) mit Klemmelemente (11, 12, 15, 16) und Kontaktelemente besitzenden Bauelementen bestückt sind, die einander benachbart angeordnet jeweils einen Trenn- oder Schaltkontakt für an die außenliegenden Klemmelemente (11, 12, 15, 16) anzuschließende ankommende und abgehende a- und b-Adern (9, 10) bilden und wobei zwischen zwei Ebenen von einander sich kreuzenden Drahtführungskanälen (5) eines Drahtführungselementes (3) ein metallisches, geerdetes Schirmblech (26) eingebracht ist, dadurch gekennzeichnet, daß an die Klemmelemente (11, 12, 15, 16) ein die a- und b-Adern (9, 10) mit einem metallischen Schirm umhüllendes Kabel (8) angeschlossen ist, dessen Schirm mit einem den den a- und b-Adern (9, 10) zugeordneten Klemmelementen (11, 12, 15, 16) benachbarten weiteren Klemmelement (14, 17) kontaktiert ist, das wiederum mit einer am Funktionselement (4) angeordneten Erdschiene (21) verbunden ist und daß das genannte Schirmblech (26) zueinander versetzte Lappen (25) aufweist, die an der metallischen Aufnahme (1) zur Anlage gelangen.

2. Verteilerleiste nach Anspruch 1, dadurch gekennzeichnet, daß das mit dem Schirm (13, 19) des Kabels verbundene und das weitere Klemmelement (14, 17) aufweisende Bauelement über einen Erdungsdraht (20) mit der genannten Erdschiene (21) verbunden ist, wobei diese Erdschiene (21) über ein federndes Erdblech (22) an der mit der metallischen Aufnahme (1) verbundenen Gestellerde (23) zur Anlage gelangt.

## Claims

1. A distributor strip with wire guide elements (3) and function elements (4) supported in a trough-like, metallic, earthed receptacle (1) alternately arranged in layers, where the function elements (4) are equipped with components possessing clamping elements (11, 12, 15, 16) and contact elements, which respectively form a separating or switching contact so as to be adjacent to one another for incoming and outgoing a-lines and b-lines (9, 10) to be connected to the external clamping elements (11, 12, 15, 16) and wherein a metallic, earthed screening plate (26) is inserted between two planes of mutually crossing wire guide channels (5) of a wire guide element (3), characterised in that a cable (8) which envelopes the a-lines and b-lines (9, 10) with a metallic screen is connected to the clamping elements (11, 12, 15, 16) with the screen of the cable in contact with a further clamping element (14, 17) adjacent to the clamping elements (11, 12, 15, 16) assigned to the a-lines and b-lines (9, 10), and is connected to an earthing bar (21) arranged on the function element (4), and that said screening plate (26) has lugs (25) mutually offset which come into contact with the metallic receptable (1).

2. A distributor strip as claimed in Claim 1, characterised in that the component connected to the screen (13, 19) of the cable with the further clamping element (14, 17) is connected to said earthing bar (21) by means of an earthing wire (20), where the earthing bar (21) comes into contact with the earthing support (23), which is connected to the metallic receptacle (1) by means of a resilient earthing plate (22).

**Revendications**

1. Barre de répartiteur, comprenant des éléments de guidage de fils (3) et des éléments fonctionnels (4) maintenus dans une réception métallique en auge (1) reliée à la terre et disposés alternativement à la façon de couches, dans laquelle les éléments fonctionnels (4) sont équipés de composants possédant des bornes (11, 12, 15, 16) et des éléments de contact qui sont disposés proches les uns des autres et forment chaque fois un contact de rupture ou de connexion pour des fils a et b arrivants et sortants (9, 10) à raccorder aux bornes (11, 12, 15, 16) situées à l'extérieur, et dans laquelle une tôle de blindage métallique (26) reliée à la terre est disposée entre deux plans de canaux de guidage de fils (5), qui se croisent, d'un élément de guidage de fils, caractérisée en ce qu'un câble (8) enveloppant les fils a et b (9, 10) par un blindage métallique est raccordé aux bornes (11, 12, 15, 16), son blindage étant mis en contact avec une autre borne (14, 17) voisine des bornes (11, 12, 15, 16) coordonnées aux fils a et b, cette autre borne étant reliée à son tour à une barre de terre (21) disposée sur l'élément fonctionnel (4), et que ladite tôle de blindage (26) présente des pattes mutuellement décalées (25) qui viennent s'appliquer contre la réception métallique (1).

2. Barre de répartiteur selon la revendication 1, caractérisée en ce que le composant relié au blindage (13, 19) du câble et présentant l'autre borne (14, 17) est relié à ladite barre de terre (21) par un fil de mise à la terre (20), cette barre de terre (21) venant s'appliquer par une tôle de terre élastique (22) contre la terre de répartiteur (23) reliée à la réception métallique (1).

FIG 1

FIG 2

# FIG 3

# FIG 4

FIG 5

25

26

31

30

3

FIG 7

FIG 6

26

25

26